# EUROPÄISCHE PATENTSCHRIFT

(11) **EP 1 096 604 B1**
(45) Veröffentlichungstag und Bekanntmachung des Hinweises auf die Patenterteilung: **08.03.2006**
(21) Anmeldenummer: 00123187.7
(22) Anmeldetag: 26.10.2000
(51) Int. Cl.: H01Q 17/00, F41H 3/02, A41D 31/00

(54) **Atmungsfähiges Material für Schutzbekleidung**
Breathable material for protective clothing
Matériau respirant pour vêtements de protection

(30) Priorität: 30.10.1999 DE 19952521
(43) Veröffentlichungstag der Anmeldung: 02.05.2001
(73) Patentinhaber: Texplorer GmbH, 41334 Nettetal (DE)
(72) Erfinder: Hexels, Gerd, 41334 Nettetal (DE)
(74) Vertreter: Lorenz, Werner

(56) Entgegenhaltungen:
- WO-A-95/30229
- US-A- 4 621 012
- US-A- 5 115 140
- US-A- 5 366 664
- US-A- 5 950 237
- PATENT ABSTRACTS OF JAPAN vol. 015, no. 160 (M-1105), 22. April 1991 (1991-04-22) & JP 03 028697 A (TORAY IND INC), 6. Februar 1991 (1991-02-06)

## Beschreibung

Die Erfindung betrifft ein atmungsfähiges Material für Schutzbekleidung zur Abschirmung gegen elektromagnetische Hochfrequenzfelder und/oder zur Tarnung gegen Wärmebildgeräte.

Ein atmungsfähiges Material dieser Art ist in der EP 0 758 479 B1 beschrieben.

Es hat sich herausgestellt, daß dieses Material nicht nur für Arbeitsschutzbekleidung durch seine Atmungsfähigkeit und seinen Schutz gegen elektromagnetische Hochfrequenzfelder sehr gut geeignet ist, sondern auch für militärische Zwecke bezüglich einer Tarnung der das Material tragenden Person gegen Wärmebildgeräte. Dies wird unter anderem durch die mit einer Silberschicht ummantelten Polyamidfasern oder -garne erreicht. Die Atmungsfähigkeit und damit die Vermeidung eines Körperwärmestaus wird durch die Atmungsfähigkeit bzw. Luftdurchlässigkeit des Trägermaterials erreicht. Durch eine Polydimethylsiloxan-Polyacrylat-Schicht, die das Trägermaterial und die Silberschicht umhüllt, wird eine Waschbarkeit und Abriebfestigkeit geschaffen.

Für eine Tarnung im sichtoptischen und im nahen Infrarot ist das Gewebe noch mit einem Tarndruck außenseitig versehen.

In der Praxis hat sich herausgestellt, daß der Farbdruck, insbesondere im militärischen Bereich der Tarndruck, nicht immer den gestellten Anforderungen in jedem Falle in optimaler Weise genügt. So ergaben sich zum Teil schlechtere Farbechtheiten und Abriebprobleme.

Der vorliegenden Erfindung liegt als Aufgabe eine weitere Verbesserung des in der EP 0 758 479 B1 beschriebenen Materiales zugrunde, insbesondere eine Multifunktionswirkung mit besserem Tragkomfort bei Beibehaltung einer geringen Emission zur Tarnung gegen Wärmebildgeräte zu schaffen.

Erfindungsgemäß wird diese Aufgabe durch die im kennzeichnenden Teil von Anspruch 1 genannten Merkmale gelöst.

In überraschender Weise hat sich herausgestellt, daß durch die Abänderung des Verbundaufbaues aus Polyamidfasern, Silberschicht, Polydimethylsiloxan-Polyacrylat-Schicht und des Farbdruckes, wobei nunmehr der Farbdruck, z.B. als Tarndruck, direkt über der Silberschicht aufgebracht und die Polydimethylsiloxan-Polyacrylat-Schicht abschließend außenseitig aufgebracht wird, eine deutlich bessere Farbechtheit und ein geringerer Abrieb des Materiales, insbesondere der Farbe des Farbdruckes, erreicht. Neben den besseren Farbwerten werden trotzdem auf diese Weise zu hohe Temperaturemissionen vermieden, die gute Abschirmung gegen Hochfrequenzfelder und vor allen Dingen auch der gute Tarneffekt gegen Wärmebildgeräte beibehalten.

Um entsprechend gute und nachvollziehbare Farbwerte zu erhalten, ist es von Vorteil, wenn die Polydimethylsiloxan-Polyacrylat-Schicht, welche die darunterliegenden Komponenten schützt, transparent ist.

In einer sehr vorteilhaften Weiterbildung der Erfindung wird ein multifunktioneller Tragkomfort erreicht, wenn vorgesehen ist, daß auf einer Seite, nämlich der späteren Innenseite einer aus dem erfindungsgemäßen Material hergestellten Schutzbekleidung, eine atmungsaktive, wasserabweisende und winddichte Membrane auf den Verbund aus Polyamid, Silberschicht, Tarndruck und Polydimethylsiloxan-Polyacrylat-Schicht aufgebracht wird.

Als erfindungsgemäße Membrane kann z.B. Polyester verwendet werden. Selbstverständlich sind jedoch auch andere Membrane möglich, die atmungsaktiv, wasserabweisend und winddicht sind, wie z.B. PTFE-Membrane oder Polyurethan.

Durch die Kombination mit der erfindungsgemäßen Membrane läßt sich aus dem Material auch eine Schutzbekleidung herstellen, die einen hohen Tragkomfort besitzt, da sie neben der Atmungsfähigkeit gleichzeitig auch noch für Schlechtwetter und als Regenkleidung geeignet ist.

Zum Schutz gegen mechanische Beschädigungen der Membrane kann auf der von dem Verbund abgewandten Seite der atmungsaktiven Membrane eine Wirkware angeordnet sein. Wenn die Wirkware dabei mit hydrophilen Eigenschaften versehen ist, wird der Tragkomfort noch besser, da dann Feuchtigkeit abtransportiert wird.

Eine weitere sehr vorteilhafte und nicht naheliegende Weiterbildung der Erfindung ergibt sich, wenn das Polyester als atmungsaktive, wasserabweisende und winddichte Membrane mit einer Aluminiumbedampfung versehen ist. In der Praxis hat sich nämlich herausgestellt, daß durch diese Maßnahme noch geringere Wärmeemissionen auftreten, womit das erfindungsgemäße Material noch besser für militärische Zwecke als Tarnschutz von Personen geeignet ist. So hat sich z.B. herausgestellt, daß das erfindungsgemäße Material neben dem normalen Sichtschutz durch den Tarndruck und einem Schutz gegen Infrarotstrahlen und ferne Infrarotstrahlen auch gegen eine Erkennung durch Laser-Spot-Licht geeignet ist.

Die Verbindung der Membrane mit dem Verbund kann durch Kleben, z.B. durch eine Punktverklebung, erfolgen. Gleiches gilt für die Verbindung der Membrane mit der Wirkware als Innenfutter.

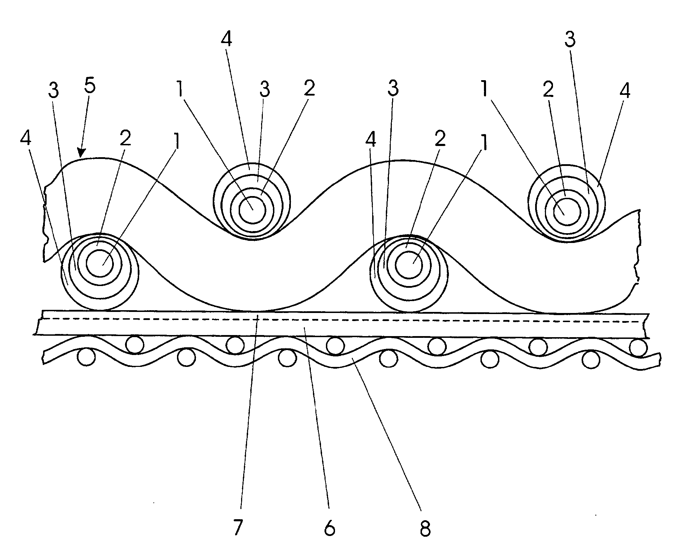

Ein Ausführungsbeispiel der Erfindung ist anhand der Zeichnung prinzipmäßig beschrieben.

Die einzige Figur zeigt stark vergrößert einen Ausschnitt aus dem erfindungsgemäße atmungsfähigen Material für eine Schutzbekleidung.

Als Basismaterial für die Schutzbekleidung dienen Polyamidfasern oder Polyamidgarne 1, die auch unter dem Warenzeichen Nylon, als 6.6 Ripstopgewebe oder auch Fallschirmseide bekannt sind. Ein derartiges Gewebe wird mit 35 Gew.% einer reinen Silberschicht 2 vollflächig überzogen und damit metallisiert, d.h. jede einzelne Faser des Gewebes besitzt eine komplette Silberummantelung mit einer sehr guten Haftung. Das auf diese Weise geschaffene Gewebe kann eine Gewichtsklasse um ca. 50 g/m² aufweisen.

Auf dieses Gewebe, das z.B. als Webware mit Kette und Schuß gebildet ist, wird ein Farbdruck 3 angebracht. Im Falle einer militärischen Verwendung wird der Farbdruck als Tarndruck 3 mit entsprechend an die jeweilige Umgebung angepaßten Farben oder Farbkombinationen aufgetragen, wobei darauf zu achten ist, daß der Farbdruck im wesentlichen auf der beim späteren Tragen als Schutzanzug nach außen gerichteten Seite aufgebracht wird.

Abschließend wird über an sich bekannte Auftrags- bzw. Antragsverfahren eine Schicht 4 aus Polydimethylsiloxan-Polyacrylat aufgebracht.

Durch die Polyamidfasern 1, die darüberliegende Silberschicht 2, dem Farbdruck 3 und der abschließenden Polydimethylsiloxan-Polyacrylat-Schicht 4 wird ein Verbund 5 geschaffen, auf welchem auf der später die Innenseite eines daraus hergestellten Schutzanzuges bildenden Seite mit Punktverklebungen eine atmungsaktive, wasserabweisende bzw. wasserdichte und winddichte Membrane 6 aufgebracht wird.

Bei einer Verwendung des Materiales für militärische Zwecke wird die Polyestermembrane 6 mit einer Aluminiumbedampfung 7 (gestrichelte Darstellung) versehen, womit eine deutlich geringere Wärmeemission geschaffen wird.

Außenseitig auf die Membrane 6 und damit auf der zu dem späteren Träger gerichteten Innenseite wird, ebenfalls durch eine Punktverklebung, eine Wirkware 8 mit Kette und Schuß aufgebracht, welche zur Erhöhung des Tragkomforts hydrophile Eigenschaften aufweisen kann. Die Wirkware 8 bildet auf diese Weise ein Innenfutter für eine aus diesem Material hergestellte Schutzbekleidung.

Konfektionstechnisch bildet das Material einen Dreilagenverbund mit einer Oberware aus dem Verbund 5, der atmungsaktiven, wasserabweisenden und winddichten Membrane 6 und er Wirkware 8 als Innenfutter.

## Patentansprüche

1. Atmungsfähiges Material für Schutzbekleidung zur Abschirmung gegen elektromagnetische Hochfrequenzfelder und/oder zur Tarnung gegen Wärmebildgeräte, wobei das Trägermaterial ein Gewebe aus Polyamid aufweist, dessen Fasern oder Garne mit einer Silberschicht ummantelt sind, und wobei eine vernetzende Polydimethylsiloxan-Polyacrylat-Schicht und ein Farbdruck vorgesehen sind,
**dadurch gekennzeichnet, daß** der Farbdruck (3) auf das Gewebe über die Silberschicht (2) aufgebracht ist, und daß über dem Farbdruck (3) die Polydimethylsiloxan-Polyacrylat-Schicht (4) aufgebracht ist.

2. Atmungsfähiges Material nach Anspruch 1,
**dadurch gekennzeichnet , daß** der Farbdruck ein Tarndruck ist, und daß die Polydimethylsiloxan-Polyacrylat-Schicht (4) transparent ist.

3. Atmungsfähiges Material nach Anspruch 1 oder 2,
**dadurch gekennzeichnet, daß** auf einer Seite eine atmungsaktive, wasserabweisende und winddichte Membrane (6) auf den Verbund (5) aus Polyamid (1), Silberschicht (2), Tarndruck (3) und Polydimethylsiloxan-Polyacrylat-Schicht (4) aufgebracht ist.

4. Atmungsfähiges Material nach Anspruch 3,
**dadurch gekennzeichnet, daß** auf der von dem Verbund (5) abgewandten Seite der atmungsaktiven Membrane (6) eine Wirkware (8) angeordnet ist.

5. Atmungsfähiges Material nach Anspruch 4,
**dadurch gekennzeichnet, daß** die Wirkware (8) mit hydrophilen Eigenschaften versehen ist.

6. Atmungsfähiges Material nach einem der Ansprüche 3 bis 5,
**dadurch gekennzeichnet, daß** die atmungsaktive, wasserabweisende und winddichte Membrane (6) aus Polyester besteht.

7. Atmungsfähiges Material nach Anspruch 6,
**dadurch gekennzeichnet, daß** das Polyester (6) mit einer Aluminiumbedampfung (7) versehen ist.

8. Atmungsfähiges Material nach einem der Ansprüche 3 bis 7,
**dadurch gekennzeichnet, daß** die Membrane (6) mit dem Verbund (5) aus Polyamid (1), Silberschicht (2), Tarndruck (3) und Polydimethylsiloxan-Polyacrylat-Schicht (4) verklebt ist.

9. Atmungsfähiges Material nach einem der Ansprüche 4 bis 8,
**dadurch gekennzeichnet, daß** die Membrane (6) mit dem Verbund (5) und/oder mit der Wirkware (8) verklebt ist.

10. Atmungsfähiges Material nach Anspruch 9,
**dadurch gekennzeichnet, daß** die Verklebung als Punktverklebung ausgeführt ist.

## Revendications

1. Matériau respirant pour vêtements de protection destinés à la protection contre les champs électromagnétiques à haute fréquence et/ou au camouflage à l'encontre des appareils d'imagerie par rayonnement thermique, dans lequel le matériau porteur comporte un tissu de polyamide dont les fibres et fils sont entourés d'une couche d'argent et dans lequel sont prévues une couche réticulante de polydiméthylsiloxane-polyacrylate et une impression en couleur,
**caractérisé en ce que** l'impression en couleur (3) est déposée sur le tissu par-dessus la couche d'argent (2), et **en ce que** la couche de polydiméthylsiloxane-polyacrylate (4) est déposée par-dessus l'impression en couleur (3).

2. Matériau respirant selon la revendication 1,
**caractérisé en ce que** l'impression en couleur est une impression de camouflage, et **en ce que** la couche de polydiméthylsiloxane-polyacrylate (4) est transparente.

3. Matériau respirant selon la revendication 1 ou 2,
**caractérisé en ce que**,
sur une face, une membrane (6) à effet respirant, hydrophobe et étanche au vent est déposée sur la combinaison (5) formée de polyamide (1), de la couche d'argent (2), de l'impression de camouflage (3) et de la couche de polydiméthylsiloxane-polyacrylate (4).

4. Matériau respirant selon la revendication 3,
**caractérisé en ce que**
un tissu tricoté (8) est disposé sur la face de la membrane à effet respirant (6) qui est éloignée de la combinaison (5).

5. Matériau respirant selon la revendication 4,
**caractérisé en ce que**
le tissu tricoté (8) est doté de propriétés hydrophiles.

6. Matériau respirant selon l'une des revendications 3 à 5,
**caractérisé en ce que**
la membrane (6) à effet respirant, hydrophobe et étanche au vent est composée de polyester.

7. Matériau respirant selon la revendication 6,
**caractérisé en ce que**
le polyester (6) est pourvu d'une métallisation d'aluminium (7).

8. Matériau respirant selon l'une des revendications 3 à 7,
**caractérisé en ce que**
la membrane (6) est collée à la combinaison (5) formée du polyamide (1), de la couche d'argent (2), de l'impression de camouflage (3) et de la couche de polydiméthylsiloxane-polyacrylate (4).

9. Matériau respirant selon l'une des revendications 4 à 8,
**caractérisé en ce que**
la membrane (6) est collée à la combinaison (5) et/ou au tissu tricoté (8).

10. Matériau respirant selon la revendication 9,
**caractérisé en ce que**
le collage est réalisé sous la forme d'un collage par points.

## Claims

1. A breathable material for protective clothing, for shielding from electromagnetic radiofrequency fields and/or for providing camouflage from heat imaging devices, in which the supporting material includes a fabric made of polyamide whereof the fibres or yarns are sheathed in a silver coating, and in which a crosslinking polydimethyl siloxane/polyacrylate coating and a colour print are provided, **characterised in that** the colour print (3) is applied to the fabric over the silver coating (2), and **in that** the polydimethyl siloxane/polyacrylate coating (4) is applied over the colour print (3).

2. A breathable material according to Claim 1, **characterised in that** the colour print is a camouflage print, and **in that** the polydimethyl siloxane/polyacrylate coating (4) is transparent.

3. A breathable material according to Claim 1 or 2, **characterised in that** on one side a breathable, water-repellent and wind-proof membrane (6) is applied to the composite (5) comprising polyamide (1), silver coating (2), camouflage print (3) and polydimethyl siloxane/polyacrylate coating (4).

4. A breathable material according to Claim 3, **characterised in that** a knitted fabric (8) is arranged on the side of the breathable membrane (6) remote from the composite (5).

5. A breathable material according to Claim 4, **characterised in that** the knitted fabric (8) is endowed with hydrophilic properties.

6. A breathable material according to one of Claims 3 to 5, **characterised in that** the breathable, water-repellent and wind-proof membrane (6) is made from polyester.

7. A breathable material according to Claim 6, **characterised in that** the polyester (6) is provided with an aluminium vapour-deposited layer (7).

8. A breathable material according to one of Claims 3 to 7, **characterised in that** the membrane (6) is bonded to the composite (5) comprising polyamide (1), silver coating (2), camouflage print (3) and polydimethyl siloxane/polyacrylate coating (4).

9. A breathable material according to one of Claims 4 to 8, **characterised in that** the membrane (6) is bonded to the composite (5) and/or to the knitted fabric (8).

10. A breathable material according to Claim 9, **characterised in that** the bonding is in the form of a spot bonding.
